# EUROPEAN PATENT APPLICATION

(11) **EP 4 564 297 A1**
(43) Date of publication of application: **04.06.2025**
(21) Application number: 23853048.9
(22) Date of filing: 10.08.2023
(51) Int. Cl.: G06T 7/90, H04W 4/50, H04W 8/22, G06Q 50/10

(54) **METHOD AND DEVICE FOR PROVIDING CONTENT ACCORDING TO DEVICE TYPE OF AUGMENTED REALITY TERMINAL**

(30) Priority: 10.08.2022 KR 20220100015
(71) Applicant: Samsung Electronics Co., Ltd., Suwon-si, Gyeonggi-do 16677 (KR)
(72) Inventor: RHYU, Sungryeul, Suwon-si Gyeonggi-do 16677 (KR)
(74) Representative: Gulde & Partner
(86) International application number: PCT/KR2023/011881
(87) International publication number: WO 2024/035181

(57) **Abstract**

The present disclosure relates to a 5G or 6G communication system for supporting a higher data transmission rate. An operation method of an application function (AF) in a wireless communication system may comprise a step of receiving information on an augmented reality capability (AR capability) of a terminal from the terminal. The operation method of the AF may comprise a step of identifying an AR capability regarding the color of the terminal on the basis of the information on the AR capability, and transmitting information on the AR capability regarding the color of the terminal to an application server (AS). The operation method of the AF may comprise a step of receiving, from the AS, a media player entry (MPE) to which color remapping processed by the AS is applied.

## Description

### [Technical Field]

The disclosure relates to a technology for providing different contents depending on the device type of an AR UE.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 preprocessing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

Augmented reality refers to a method for transferring information that is additionally expressed in the surrounding real world perceived by the user. A display device is usually required to express the additional information. The form in which light reflected from a real object passes through the display and is perceived by the user is classified as optical see through (OST), and the form in which light reflected from a real object is captured by a camera and output on the display and perceived by the user is classified as video see through (VST).

According to the above classifications, VST-type UEs are thicker and heavier than OST-type UEs because their display is opaque, and a camera for capturing the external image is equipped. Technological advancements have shortened the time it takes to acquire external images, add AR information, and display them to users to less than 10ms. Research reveals that if a resultant image using an input as the user's motion may be provided within 15ms, the user will not feel awkward or dizzy.

Meanwhile, research efforts are being underway to various types of displays for OST-type UEs, such as ones in which light is transferred along many waveguides installed on the glass and reflected at a particular position to the user's eyes or others in which a projector is built in one side of the glass for projection at an intended position on the surface of the glass.

OST- and VST-type UEs have a big difference in the operating principle of providing images to the user, which stems from the limitations of the technology handling light. In other words, OST-type UEs has no way to completely block external light when the light reflected by an external object passes through the same location as the light for expression of AR information. Further, when the light reflected by the external object passes through a different location from that of the light for expression of AR information, the brightness and color of the light for expression of AR information are perceived as different due to the human relative perception of light.

The first issue occurs due to insufficient technology in offsetting the external light with the light from the UE (e.g., it is impossible to project black light to display black letters), and the second issue comes from the fact that the range of brightness perceived by humans vary dynamically. (e.g., it is impossible to perceive the color of an object sitting against the light source under the backlit situation)

For such reasons, among the AR UEs, the OST UE may not represent content as intended by the content provider, but the VST UE can in most case. Therefore, the content provider may not be aware whether the content is properly shown to the user, and the user may not see the content.

### [Detailed Description of the Invention]

### [Technical Problem]

The disclosure may provide a method for identifying the device type of a UE receiving a service when a content provider provides different content experiences depending on the device type of the AR UE.

The disclosure may provide a method for providing content according to the identified device type of a UE and generating content according to the identified device type of the UE and additional indexes.

The disclosure may provide a method for designating a post-processing range of content according to the identified device type of the UE.

### [Technical Solution]

A method for operating an application function (AF) in a wireless communication system, according to an embodiment of the disclosure, may comprise receiving information about an augmented reality (AR) capability of a user equipment (UE) from the UE, identifying an AR capability about a color of the UE based on the information about the AR capability and transmitting AR capability information about the color of the UE to an application server (AS), and receiving a media player entry (MPE) to which color remapping processed by the AS is applied from the AS.

According to an embodiment, the information about the AR capability may include at least one of an AR UE type, an AR display type, a valid color space, an opacity, an invalid color space, illuminance measurement information, illuminance information, and a reference color space.

According to an embodiment, the method for operating the AF may further comprise identifying an AR policy from an application provider (AP).

According to an embodiment, the method for operating the AF may further comprise transmitting the MPE to which the color remapping processed by the AS is applied to the UE.

According to an embodiment, the method for operating the AF may further comprise performing at least one of service discovery and service provisioning.

A method for operating a UE in a wireless communication system, according to an embodiment of the disclosure, may comprise transmitting information about an augmented reality (AR) capability of the UE to an application function (AF) and receiving a media player entry (MPE) to which color remapping processed by an application server (AS) based on the information about the AR capability is applied from the AS.

An application function (AF) entity in a wireless communication system according to an embodiment of the disclosure may comprise a transceiver and a processor. The processor may control to receive information about an augmented reality (AR) capability of a user equipment (UE) from the UE, identify an AR capability about a color of the UE based on the information about the AR capability and transmit AR capability information about the color of the UE to an application server (AS), and receive a media player entry (MPE) to which color remapping processed by the AS is applied from the AS.

A UE in a wireless communication system according to an embodiment of the disclosure may comprise a transceiver and a processor. The processor may control to transmit information about an augmented reality (AR) capability of the UE to an application function (AF); and receive a media player entry (MPE) to which color remapping processed by an application server (AS) based on the information about the AR capability is applied from the AS.

### [Advantageous Effects]

The method and device according to an embodiment of the disclosure may efficiently identify the device type of a UE receiving a service when a content provider provides different content experiences depending on the device type of the AR UE and generate content according to the device type of the UE.

### [Brief Description of the Drawings]

FIG. 1 illustrates a 5G media streaming (5GMS) system architecture according to an embodiment of the disclosure;
FIG. 2 is a view illustrating a method for requesting information about a UE according to an embodiment of the disclosure;
FIG. 3 illustrates an example of a media capability UE architecture according to an embodiment of the disclosure;
FIG. 4 illustrates another example of a media capability UE architecture according to an embodiment of the disclosure;
FIG. 5 is a view illustrating a method for providing information about a UE according to an embodiment of the disclosure;
FIG. 6 is a view illustrating a method for providing content according to an identified UE device type according to an embodiment of the disclosure;
FIG. 7 is a view illustrating a method for providing a policy for an AR UE according to an embodiment of the disclosure;
FIG. 8 is a view illustrating a method for selecting a content list for an AR UE according to an embodiment of the disclosure;
FIG. 9 illustrates a method for policy reception based on a UE capability, post-processing, and transmission of changed content according to an embodiment of the disclosure;
FIG. 10 illustrates a method for designating a post-processing range of content according to an identified UE device type according to an embodiment of the disclosure;
FIG. 11 illustrates a structure of a network entity according to an embodiment of the disclosure;
FIG. 12 illustrates a structure of a UE according to an embodiment of the disclosure; and
FIG. 13 is a flowchart illustrating a method for operating an AF according to an embodiment of the disclosure.

### [Mode for Carrying out the Invention]

Hereinafter, embodiments of the disclosure are described in detail with reference to the accompanying drawings.

In describing embodiments, the description of technologies that are known in the art and are not directly related to the present invention is omitted. This is for further clarifying the gist of the present disclosure without making it unclear.

For the same reasons, some elements may be exaggerated or schematically shown. The size of each element does not necessarily reflects the real size of the element. The same reference numeral is used to refer to the same element throughout the drawings.

Advantages and features of the present disclosure, and methods for achieving the same may be understood through the embodiments to be described below taken in conjunction with the accompanying drawings. However, the present invention is not limited to the embodiments disclosed herein, and various changes may be made thereto. The embodiments disclosed herein are provided only to inform one of ordinary skilled in the art of the category of the present disclosure. The present invention is defined only by the appended claims. The same reference numeral denotes the same element throughout the specification.

It should be appreciated that the blocks in each flowchart and combinations of the flowcharts may be performed by computer program instructions. Since the computer program instructions may be equipped in a processor of a general-use computer, a special-use computer or other programmable data processing devices, the instructions executed through a processor of a computer or other programmable data processing devices generate means for performing the functions described in connection with a block(s) of each flowchart. Since the computer program instructions may be stored in a computer-available or computer-readable memory that may be oriented to a computer or other programmable data processing devices to implement a function in a specified manner, the instructions stored in the computer-available or computer-readable memory may produce a product including an instruction means for performing the functions described in connection with a block(s) in each flowchart. Since the computer program instructions may be equipped in a computer or other programmable data processing devices, instructions that generate a process executed by a computer as a series of operational steps are performed over the computer or other programmable data processing devices and operate the computer or other programmable data processing devices may provide steps for executing the functions described in connection with a block(s) in each flowchart.

Further, each block may represent a module, segment, or part of a code including one or more executable instructions for executing a specified logical function(s). Further, it should also be noted that in some replacement embodiments, the functions mentioned in the blocks may occur in different orders. For example, two blocks that are consecutively shown may be performed substantially simultaneously or in a reverse order depending on corresponding functions.

As used herein, the term "unit" means a software element or a hardware element such as a field-programmable gate array (FPGA) or an application specific integrated circuit (ASIC). A unit plays a certain role. However, 'unit' is not limited to software or hardware. A 'unit' may be configured in a storage medium that may be addressed or may be configured to execute one or more processors. Accordingly, as an example, a 'unit' includes elements, such as software elements, object-oriented software elements, class elements, and task elements, processes, functions, attributes, procedures, subroutines, segments of program codes, drivers, firmware, microcodes, circuits, data, databases, data architectures, tables, arrays, and variables. Functions provided within the components and the 'units' may be combined into smaller numbers of components and 'units' or further separated into additional components and 'units'. Further, the components and 'units' may be implemented to execute one or more CPUs in a device or secure multimedia card. According to embodiments of the disclosure, a "...unit" may include one or more processors.

As used herein, the term 'terminal' or 'device' may also be referred to as a mobile station (MS), user equipment (UE), user terminal (UT), terminal, wireless terminal, access terminal (AT), subscriber unit, subscriber station (SS), wireless device, wireless communication device, wireless transmit/receive unit (WTRU), mobile node, or mobile or may be referred to in other terms. Various embodiments of the terminal may include cellular phones, smart phones with wireless communication capabilities, personal digital assistants (PDAs) with wireless communication capabilities, wireless modems, portable computers with wireless communication capabilities, capturing/recording/shooting/filming devices, such as digital cameras, having wireless communication capabilities, game players with wireless communications capabilities, music storage and playback home appliances with wireless communications capabilities, Internet home appliances capable of wireless Internet access and browsing, or portable units or terminals incorporating combinations of those capabilities. Further, the terminal may include a machine to machine (M2M) terminal and a machine-type communication (MTC) terminal/device, but is not limited thereto. In the disclosure, the terminal may be referred to as an electronic device or simply as a device.

Hereinafter, the operational principle of the disclosure is described below with reference to the accompanying drawings. When determined to make the subject matter of the disclosure unnecessarily unclear, the detailed description of known functions or configurations may be skipped in describing embodiments of the disclosure. The terms as used herein are defined considering the functions in the present disclosure and may be replaced with other terms according to the intention or practice of the user or operator. Therefore, the terms should be defined based on the overall disclosure.

Hereinafter, embodiments of the present invention are described in detail with reference to the accompanying drawings. Further, although a communication system using UWB is described in connection with embodiments of the present invention, as an example, embodiments of the present invention may also apply to other communication systems with similar technical background or features. For example, a communication system using Bluetooth or ZigBee may be included therein. Further, embodiments of the present invention may be modified in such a range as not to significantly depart from the scope of the present invention under the determination by one of ordinary skill in the art and such modifications may be applicable to other communication systems.

When determined to make the subject matter of the present invention unclear, the detailed description of the known art or functions may be skipped. The terms as used herein are defined considering the functions in the present disclosure and may be replaced with other terms according to the intention or practice of the user or operator. Therefore, the terms should be defined based on the overall disclosure.

In the disclosure, a method for identifying the device type of an AR UE receiving a service (or content) is provided. According to an embodiment, the device type of the AR UE may be an optical see through (OST) type or a video see through (VST) type.

An application provider (AP) that provides a content service using a communication network system may identify the device type of the AR UE receiving the service using the communication method proposed in the disclosure. Based on the device type identification of the AR UE receiving the service, the AP may determine and/or perform an appropriate follow-up.

In general, a UE may identify and manage the technical specifications provided by the corresponding component for a UE component physically, logically, or dynamically connected to the UE. According to an embodiment, the display in the AR UE is physically connected and generally not detached for replacement, but a dynamic connection may also be considered for various reasons, such as a difference according to the distance of the object to be watched, outdoor/indoor replacement, multi-user support, and other aesthetic reasons.

The AR UE may generate information about the UE display component based on at least one of a preset information value for the display, an attribute value of a replaceable display component, and a display performance measurement value through a separate sensor.

The performance of expressing colors perceived by the user on the UE display is important, and coordinate calibration for calibration according to the position of the display and the position of the user's eye, and the degree of user perception as to how the color or brightness perceived by the user are perceived as compared with reference colors such as the gray card of the real world may be calibrated.

According to an embodiment, the UE may obtain at least one of information provided by the UE display, calibration information obtained through a question-and-answer with the user, and measurement results using a sensor, and determine the valid color space value that may be expressed by the UE and perceived by the user based on the obtained at least one piece of information.

According to an embodiment, the valid color space is important information for the OST-type UE among AR glass devices, and the valid color space may vary depending on the technical principle of the AR UE display worn by the user, the illuminance of the surrounding environment in which the user is located, the color of objects around the user, or the like.

According to an embodiment, the UE information that may be obtained and provided by the UE in the disclosure may include at least one of an AR UE type, an AR display type, a valid color space, opacity, invalid color space, whether illuminance is measurable/range, illuminance information, reference color space, and whether a color process is included. A detailed description of each piece of information included in the UE information is as follows.
- AR UE type: A plurality of supported content formats such as augmented reality (AR), virtual reality (VR), and mixed reality (MR) may be displayed. The service provider and the communication network system delegated for service by the service provider may determine to provide AR content when AR is included in the UE type information reported by the UE. Similarly, the service provider and the communication network system delegated for service by the service provider may determine to provide VR content if VR is included in the UE type information reported by the UE, and MR content if MR is included in the UE type information.
- AR display type: Display components of the UE, such as OST and VST, may be displayed. If OST is included in the AR display type reported by the UE, the service provider and the communication network system delegated for service by the service provider may determine the content and all post-processing processes considering the OST UE. Similarly, if VST is included in the AR display type reported by the UE, the service provider and the communication network system delegated for service by the service provider may determine to provide content considering the VST UE.
- Valid color space: refers to a color space expressible by the UE or perceivable by the user in the color space of the reference color space indicated as expressible by the UE. When a primary color (e.g., R, G, B, W) is represented in a standard color space, it indicates whether the intended color leads to an accurate representation according to the position of the color coordinates (e.g., Lab). The valid color space is represented as a list of coordinates within the reference color space of the primary colors. It may be expressed as the coordinates to which the primary color is mapped within the reference color space, or a ratio of the size of the representable color space area to the size of the reference color space area. If the valid color space range of the UE is received in the process of preparing and providing the content, it may be investigated whether a color outside the valid color space is included in the content to be provided. The corresponding information may be investigated for each frame of the content, and the corresponding information may be investigated and specified in advance for the entire content. Based on the specified information, the service provider and the communication network system delegated for service by the service provider may determine whether the whole or only part of the color space is expressed when the content is provided to the corresponding UE. When only part of the color space is expressed when the content is provided to the corresponding UE, the service provider may determine whether to provide the content. Whether to provide content is provided may be specified for each content at the time of requesting the content of the UE or at the step of delegating the service to the communication network system. The delegated communication network system may identify whether the service provider supports the content in the limited color space and provide the content or refuse to provide the content accordingly.
- Opacity: The degree to which the UE may block external light. It includes not only the color space that may be expressed by the UE, but also information about whether the expressed color space may be mixed with external light. When the color of the content indicates not only the color coordinates but also the opacity (transparency) within the color space, the opacity indicated by the content is added or multiplied by the range of supportable opacity of the UE and is alpha-blended.
- Invalid color space: This is a coordinate list of colors that may not be expressed by the UE within the reference color space. The UE may report an invalid color space in addition to, or instead of, the valid color space. According to the technical implementation method for the UE display, some colors (e.g., black) of the entire color space (e.g., DCI-P3) and brightness may not be expressed. The UE may specify the color coordinates and the color error range (Delta E) of the invalid color space. The color reproducibility of the UE may be measured and reported as a reproduction rate for a range except for the invalid color space of the entire color space. The communication network system delegated for service by the service provider may determine whether to provide the content to be provided, provide it as it is, or change and provide it based on the invalid color space information reported by the UE. In providing the content including the UE's invalid color space as it is, it is regarded that the UE determines the method for bypassing the invalid color space. If it is determined that the content is to be changed according to the UE's invalid color space information, a plurality of mapping tables preferred by the content provider for the invalid color space may be provided. The mapping table for the invalid color space may be performed by an edge server of the communication network system or by the UE. In the service preparation process, the AF receives the UE's invalid color space information and identifies additional information and manifest information about the content or receives the mapping table by communicating with the service provider based on there being an invalid color space in the UE. If the color of the invalid color space is converted into a color of the valid color space based on the mapping table, content different from the content provided as it is, is generated. Accordingly, a new media player entry (MPE) is provided to the UE including the invalid color space. The UE starts playing content from the new MPE.
- Whether illuminance is measurable/range: Indicates whether the ambient illuminance may be measured by the UE. If it is 0, it indicates that the surroundings are dark or the illuminance may not be measured. Other positive values represent the maximum range values within which the illuminance may be measured.
- Illuminance information: Brightness information about the surroundings. The UE measures the ambient illuminance and then represents the measurement value. The service provider and the communication network system delegated for service by the service provider may determine the content to be provided based on the illuminance information reported by the UE, or determine post-processing for brightness correction or the like. For example, AR content for very dark environments and AR content for very bright environments may differ in the production process. Accordingly, a new media player entry (MPE) including the details of the correction performed based on illuminance information is provided. The UE starts playing content from the new MPE.
- Reference color space: indicates the type of color space used to express colors in the UE display.
- Whether color process is included: When the UE includes a color processing processor in the UE for an unsupported color space, the UE may include the same in the performance information list reported to the AF. If the color process is reported as included and, accordingly, a color processing policy is received from the server, the UE performs a color remapping process on the received content according to the color processing policy.

The UE according to an embodiment of the disclosure may prepare and provide a value for the information among the UE information requested by the service provider in the process of receiving the service through the communication network system.

According to an embodiment, in providing the service through the communication network system, the service provider may request capability information about the UE connected to the communication network system to request a service and determine a content provision method according to the received UE capability information.

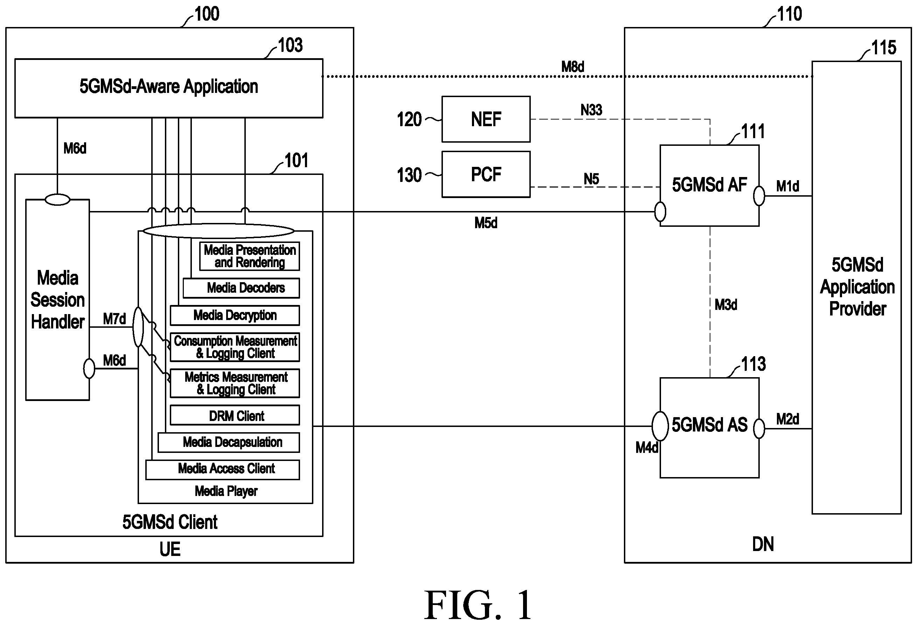

FIG. 1 illustrates a 5G media streaming (5GMS) system architecture according to an embodiment of the disclosure.

For convenience of description, the method for providing content through the communication network system proposed in the disclosure is described based on the 3GPP 5GMS service (3GPP TS 26.501), but the application of the embodiments of the disclosure is not limited to the corresponding standard.

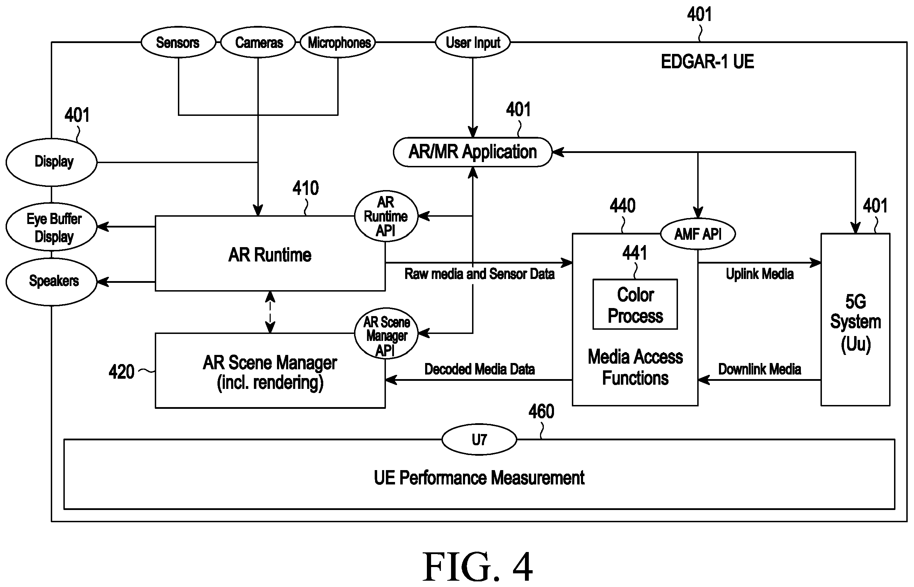

The architecture of the communication network system and UE of 5GMS shown in FIG. 1 may be described with reference to FIG. 4.2.2-1 of 3GPP TS 26.50.

Referring to FIG. 1, a user equipment (UE) 100 may include a 5G media streaming downlink (GMSd) client 101 and a 5GMSd-aware application 103. The 5GMSd client 101 may include a media player (or MP) and a media session handler (or MSH). The media player may include at least one of media presentation and rendering, media decoders, media decryption, consumption measurement & logging client, metrics measurement & logging client (MMLC), DRM client, media decapsulation, and media access client.

The data network (DN) 110 may include a 5GMSd application function (AF) 111, a 5GMSd application server (AS) 113, and a 5GMSd application provider (AP) 115. The 5GMSd AF 111 may communicate with a network expansion function (NEF) 120 and a policy control function (PCF) 130.

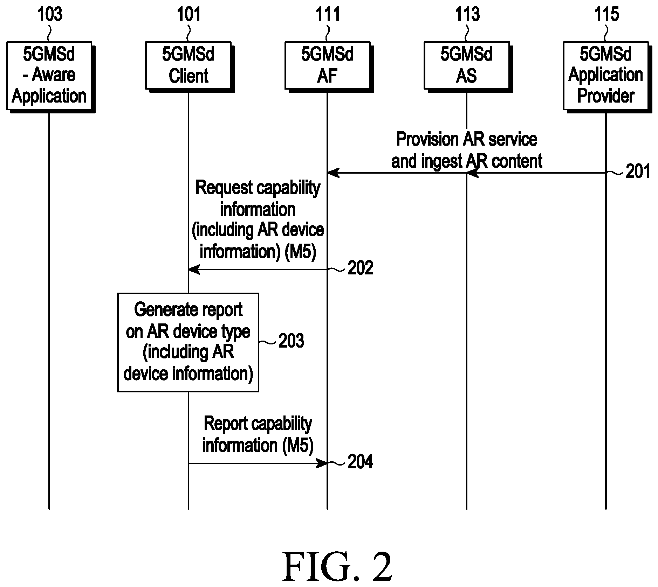

FIG. 2 is a view illustrating a method for requesting information about a UE according to an embodiment of the disclosure.

In an architecture such as 5GMS, the service provider may request information about the UE receiving a service to provide AR content based on capability information about the AR UE (5GMSd client).

Referring to FIGS. 1 and 2, in step 201, the 5GMSd AP 115 may delegate AR services and content data to each of the 5GMSd AF 111, which is a control server of the communication network system, and the 5GMSd AS 113, which is a data server.

In step 202, the 5GMSd AF 111 may request the 5GMSd client 101 requesting a service to provide capability information including AR UE information.

In step 203, the 5GMSd client 101 may generate a report regarding the AR UE including AR UE information requested by the 5GMSd AF 111.

In step 204, the 5GMSd client 101 may transmit a capability information report to the 5GMSd AF 111.

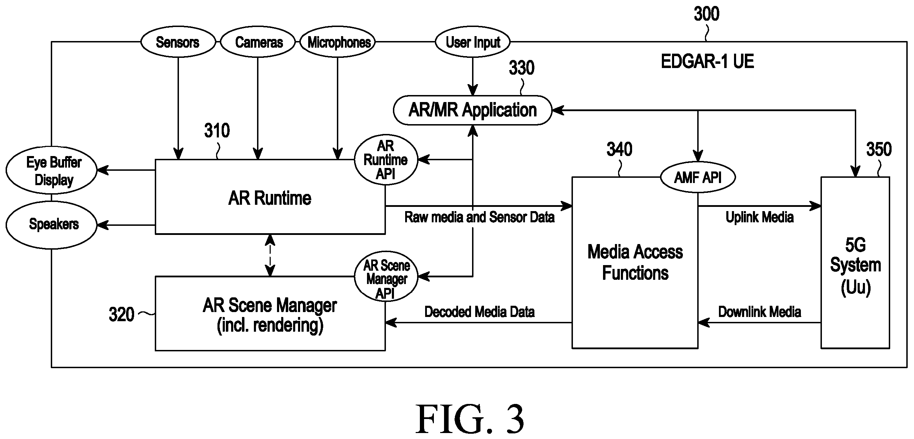

FIG. 3 illustrates an example of a media capability UE architecture according to an embodiment of the disclosure.

The UE architecture may include components for AR processing in addition to the basic 5GMS components.

FIG. 3 illustrates a UE architecture 300 of MeCAR based on 3GPP MeCAR (TS 26.119) according to an embodiment of the disclosure.

Referring to FIG. 3, the UE architecture 300 may include an AR runtime 310, an AR scene manager 320 including rendering, an AR/MR application 330, media access functions 340, and a 5G system 350.

FIG. 4 illustrates another example of a media capability UE architecture according to an embodiment of the disclosure.

In order to provide the function proposed in the disclosure, the MeCAR architecture 400 as an embodiment may include a separate display component 401 that provides information to the AR runtime 310 in addition to the eye buffer display component that transmits data to the display. Further, the MeCAR architecture 400 may include a color process 441 for post-processing content received from the communication network.

Referring to FIG. 4, the UE architecture 400 may include a display component 401, an AR runtime 410, an AR scene manager 420 including rendering, an AR/MR application 430, media access functions 440 including a color process 441, and a 5G system 450.

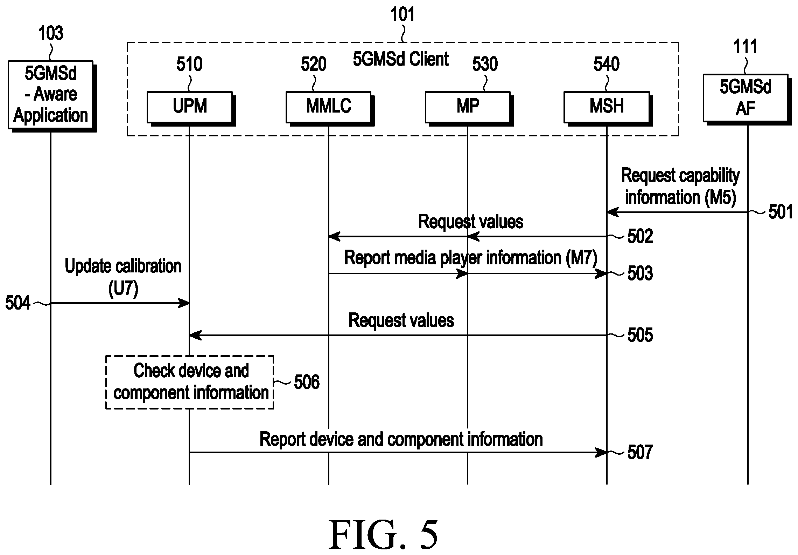

FIG. 5 is a view illustrating a method for providing information about a UE according to an embodiment of the disclosure.

The UE may obtain valid information periodically or from the time of receiving a request, targeting the components of the UE to provide the requested information. According to an embodiment, the components of the UE include a component having an interface directly connected to the 5GMS and other components.

The MMLC (e.g., metrics measurement & logging client of FIG. 1) within the media player (e.g., the media player of FIG. 1) component is a component defined in 3GPP TS 26.501 and may obtain information from the internal components of media player and provide information using the 5GMS M7 interface.

The UE according to an embodiment of the disclosure may include a separate UE performance measurement (UPM) component 510 to obtain information from external components (processing modules, HW sensors, and displays).

When the application identifies user cognitive color space information about the UE display through calibration including user interaction, the U7 interface may be initiated so that the application may update the UPM with the corresponding value.

Referring to FIGS. 1 and 5, in step 501, the 5GMSd AF 111 may request UE capability information from the media session handler (MSH) 540 in the 5GMSd client 101.

In step 502, the MSH 540 in the 5GMSd client 101 may transmit a message requesting values related to the requested capability information to each of the media player (MP) 530 and metrics measurement & logging client (MMLC) 520 in the 5GMSd client 101.

In step 503, the MMLC 520 in the 5GMSd client 101 may report the media player information to the MP 530, and the MP 530 may report the media player information to the MSH 540. In step 504, the 5GMSd-aware application 103 may transmit the update calibration to the UE performance measurement (UPM) 510 in the 5GMSd client 101. In step 505, the MSH 540 may transmit a message requesting values related to the requested capability information to the UPM 510.

In step 506, the UPM 510 may identify UE and component information, and in step 507, the UPM 510 may report the UE and component information to the MSH 540.

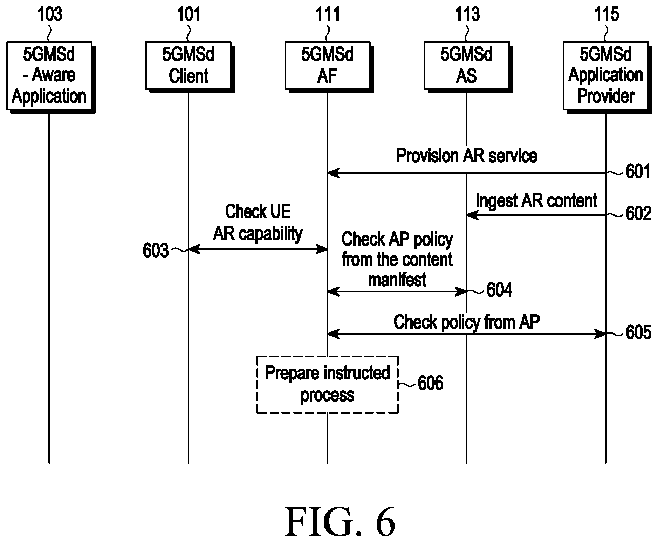

FIG. 6 is a view illustrating a method for providing content according to an identified UE device type according to an embodiment of the disclosure.

According to an embodiment, if the AF is aware that it is of an OST type or has an invalid color space in the process of identifying capability information with the UE, it may identify whether the content includes policy information about the corresponding information. The service provider may transfer policy information along with provision information or media during the service delegation process, or may transfer if the AF requests the service provider along with the UE information.

The AF may determine whether there is an instruction for an additional process based on the received policy information.

Referring to FIGS. 1 and 6, in step 601, the 5GMSd AP 115 may provide an AR service to the 5GMSd AF 111. In step 602, the 5GMSd AP 115 may provide AR content to the 5GMSd AS 113.

In step 603, the 5GMSd client 101 and the 5GMSd AF 111 may identify the UE AR capability. In step 604, the 5GMSd AF 111 and the 5GMSd AS 113 may identify the AP policy from the content manifest.

In step 605, the 5GMSd AF 111 may identify the policy from the 5GMSd AP 115. In step 606, the 5GMSdAF 111 may prepare for an instructed process.

According to an embodiment, the service provider may determine whether to provide content for the AR UE, specifically a UE equipped with an OST- or VST-type display, a UE with a constraint to the color space that may be expressed, or a UE with information about the color space that may not be expressed, for the content to be served, and specify an indication of whether to provide the content in the media file of the content or the manifest file describing the configuration of the content.

According to an embodiment, the service provider may have optimal color space information about the content to be provided and instruct to meet the color space at the time of providing the service. According to an embodiment, the service provider does not include information about whether to provide content but stores it as a separate policy and, when requested by the communication network system delegated for service, provide it as a support or error code.

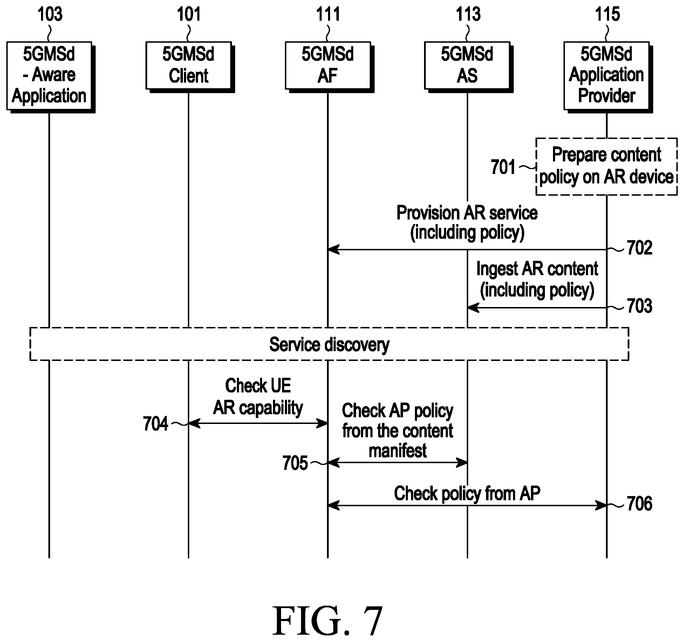

FIG. 7 is a view illustrating a method for providing a policy for an AR UE according to an embodiment of the disclosure.

Referring to FIGS. 1 and 7, in step 701, the 5GMSd AP 115 may prepare for a content policy for an AR UE. In step 703, the 5GMSd AP 115 may provide an AR service including the content policy for the AR UE to the 5GMSd AF 111. In step 704, the 5GMSd AP 115 may provide AR content including the content policy for the AR UE to the 5GMSd AS 113. According to an embodiment, a service discovery operation may be performed.

In step 704, the 5GMSd client 101 and the 5GMSd AF 111 may identify the UE AR capability. In step 705, the 5GMSd AF 111 and the 5GMSd AS 113 may identify the AP policy from the content manifest. In step 706, the 5GMSd AF 111 may identify the policy from the 5GMSd AP 115.

According to an embodiment, in the step of discovering the content in the AR UE, policy information about the color space is included and may be grasped by the UE. When selecting content, the AR UE may perform content discovery based on whether the policy information is appropriate or not for the UE's own performance information.

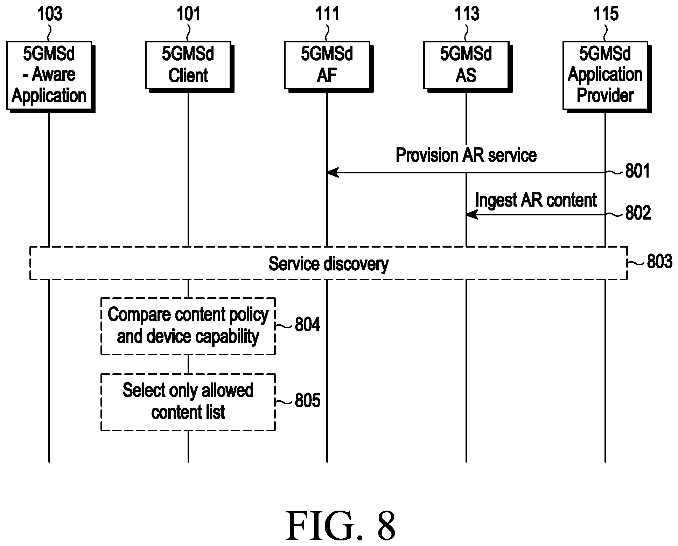

FIG. 8 is a view illustrating a method for selecting a content list for an AR UE according to an embodiment of the disclosure.

Referring to FIGS. 1 and 8, in step 801, the 5GMSd AP 115 may provide an AR service to the 5GMSd AF 111. In step 803, the 5GMSd AP 115 may provide AR content to the 5GMSd AS 113. According to an embodiment, a service discovery operation may be performed.

In step 804, the 5GMSd client 101 may compare the content policy and the device capability. In step 805, the 5GMSd client 101 may select only an allowed content list.

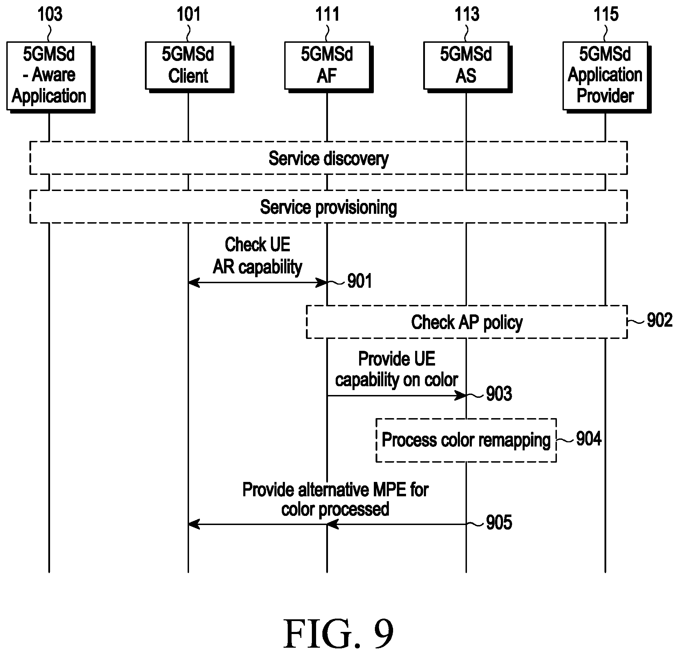

FIG. 9 illustrates a method for policy reception based on a UE capability, post-processing, and transmission of changed content according to an embodiment of the disclosure.

The AF may provide a media player entry (MPE) to a UE receiving a service. The MPE may be a manifest document for receiving content or a URL for receiving a manifest document. The manifest document may provide information so that appropriate content may be created in advance and appropriate content may be received in various environments of the UE (network speed, UE resolution, etc.). According to an embodiment, at least one of an AR UE, a VR UE, an MR UE, an OST-type display, and a VST-type display may be provided with different content based on the manifest document.

According to an embodiment, content reception information according to the UE type and display type may be included in the manifest document, and various types of manifest documents may be provided for each UE type and display type, and the MPE for receiving them may be separately managed. When content is provided to a UE with an OST-type display (e.g., navigation), if the expression of basic information is configured based on the VST-type display, a separate MPE that has undergone color conversion/matching process based on the color space of the OST-type display may be provided.

The AF provides an appropriate media player entry (MPE) according to the type of UE that is to receive the service.

Referring to FIGS. 1 and 9, at least one of a plurality of entities 101, 103, 111, 113, and 115 may perform service discovery and/or service provisioning.

In step 901, the 5GMSd client 101 and the 5GMSd AF 111 may identify the UE AR capability. In step 902, at least one of the 5GMSd AF 111, the 5GMSd AS 113, and the 5GMSd AP 115 may identify the AP policy.

In step 903, the 5GMSd AF 111 may provide UE capability on color to the 5GMSd AS 113. In step 904, the 5GMSd AS 113 may perform color remapping based on UE capability on color. In step 905, the 5GMSd AS 113 may provide an alternative MPE on the processed color to each of the 5GMSd AF 111 and the 5GMSd client 101.

According to an embodiment, content may be generated based on the identified UE device type difference and additional information.

According to an embodiment, when the UE is of an OST type, the AF may receive expressible range information from the UE (ambient illuminance, opacity, color space according to illuminance, and invalid color space) and transfer the expressible range of the UE to the communication network system edge server (e.g., AS). The edge server (e.g., AS) may adjust the overall brightness of the content according to the ambient illuminance of the UE, adjust the content color within a given opacity, or adjust the expression range and brightness based on the perceivable color space according to the illuminance. The edge server (e.g., AS) performs a process of replacing the color space that may not be displayed with a perceivable color space by referring to the color space exchange table provided by the service provider (e.g., AP), and accordingly, transfer the MPE providing the updated content to the UE through the AF.

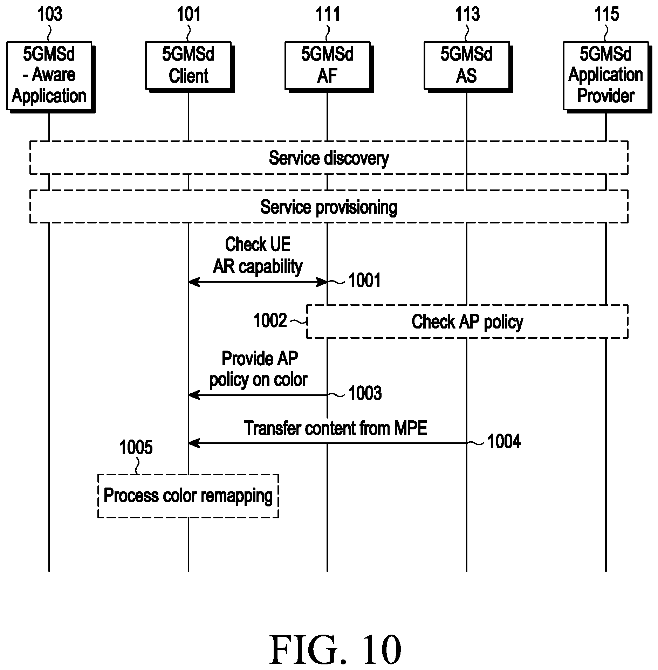

FIG. 10 illustrates a method for designating a post-processing range of content according to an identified UE device type according to an embodiment of the disclosure.

When the UE has a color processing processor (color process 441 in FIG. 4) in the UE for an unsupported color space, it may be included in the performance information list reported to the AF. The AF may identify the service provider's policy to avoid arbitrary execution when the AF replaces the color space. When the service provider provides a color remapping lookup table permitted for the corresponding content, it may transfer the service provider's policy and color space conversion table to the UE to allow the UE to process them. The service provider may provide one or more color space conversion tables, and the UE selects and converts ] one most similar to the UE specifications.

Referring to FIGS. 1 and 10, at least one of a plurality of entities 101, 103, 111, 113, and 115 may perform service discovery and/or service provisioning.

In step 1001, the 5GMSd client 101 and the 5GMSd AF 111 may identify the UE AR capability. In step 1002, at least one of the 5GMSd AF 111, the 5GMSd AS 113, and the 5GMSd AP 115 may identify the AP policy.

In step 1003, the 5GMSd AF 111 may provide an AP policy regarding the color to the 5GMSd client 101. In step 1004, the 5GMSd AS 113 may provide content from the MPE to the 5GMSd client 101. In step 1005, the 5GMSd client 101 may perform color remapping based on the AP policy regarding the color.

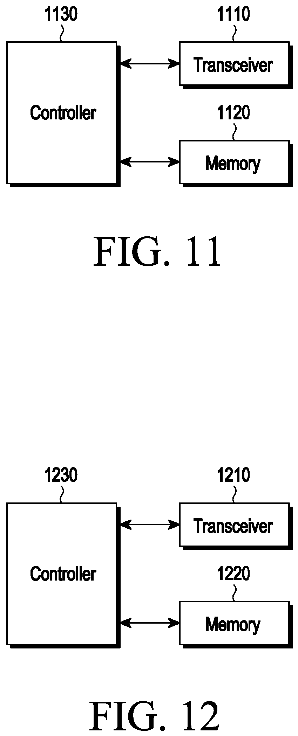

FIG. 11 illustrates a structure of a network entity according to an embodiment of the disclosure.

The network entity of FIG. 11 may be any one of the plurality of network entities 111, 113, and 115 described with reference to FIGS. 1 to 10. For example, the network entity may be any one of an application function (AF), an application server (AS), and an application provider (AP).

Referring to FIG. 11, the network entity may include a transceiver 1110, memory 1120, and a controller 1130.

The transceiver 1110, controller 1130, and memory 1120 of the network entity may operate according to the above-described communication methods by the network entity. However, the components of the network entity are not limited thereto. For example, the network entity may include more or fewer components than the above-described components. The transceiver 1110, the controller 1130, and the memory 1120 may be implemented in the form of a single chip. The controller 1130 may include one or more processors.

The transceiver 1110 collectively refers to a transmitter of the network entity and a receiver of the network entity and may transmit and receive signals to/from another device. The transceiver 1110 may receive signals via a radio channel, output the signals to the controller 1130, and transmit signals output from the controller 1130 via a radio channel.

The memory 1120 may store programs and data necessary for the operation of the network entity. Further, the memory 1120 may store control information or data that is included in the signal obtained by the network entity. The memory 1120 may include a storage medium, such as ROM, RAM, hard disk, CD-ROM, and DVD, or a combination of storage media. Rather than being separately provided, the memory 1120 may be embedded in the controller 1130.

The controller 1130 may control a series of processes for the network entity to be able to operate according to the above-described embodiments.

FIG. 12 illustrates a structure of a UE according to an embodiment of the disclosure.

The UE of FIG. 12 may correspond to the terminal or the UE described with reference to FIGS. 1 to 10. Referring to FIG. 12, the UE may include a transceiver 1210, memory 1220, and a controller 1230.

The transceiver 1210, controller 1230, and memory 1220 of the UE may operate according to the above-described communication methods by the UE. However, the components of the UE are not limited thereto. For example, the UE may include more or fewer components than the above-described components. The transceiver 1210, the controller 1230, and the memory 1220 may be implemented in the form of a single chip. The controller 1230 may include one or more processors.

The transceiver 1210 collectively refers to a transmitter of the UE and a receiver of the UE and may transmit and receive signals to/from another device. To that end, the transceiver 1210 may include a radio frequency (RF) transmitter for frequency-up converting and amplifying signals transmitted and an RF receiver for low-noise amplifying signals received and frequency-down converting the frequency of the received signals. However, this is merely an example of the transceiver 1210, and the components of the transceiver 1210 are not limited to the RF transmitter and the RF receiver.

The transceiver 1210 may receive signals via a radio channel, output the signals to the controller 1230, and transmit signals output from the controller 1230 via a radio channel.

The memory 1220 may store programs and data necessary for the operation of the UE. The memory 1220 may store control information or data that is included in the signal obtained by the UE. The memory 1220 may include a storage medium, such as ROM, RAM, hard disk, CD-ROM, and DVD, or a combination of storage media. Rather than being separately provided, the memory 1220 may be embedded in the controller 1230.

The controller 1230 may control a series of processes for the UE to be able to operate according to the above-described embodiments.

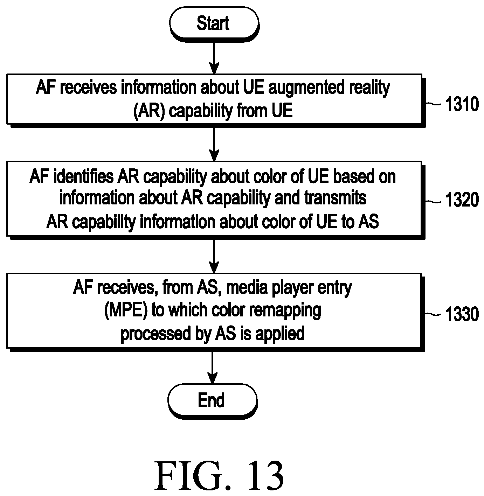

FIG. 13 is a flowchart illustrating a method for operating an AF according to an embodiment of the disclosure.

Referring to FIG. 13, in step 1310, the application function (AF) may receive information about augmented reality capability of the UE from the UE.

In step 1320, the AF may identify an AR capability about a color of the UE based on the information about the AR capability and transmit AR capability information about the color of the UE to an application server (AS).

In step 1330, the AF may receive, from the AS, a media player entry (MPE) to which color remapping processed by the AS is applied.

According to an embodiment, the information about the AR capability may include at least one of an AR UE type, an AR display type, a valid color space, an opacity, an invalid color space, illuminance measurement information, illuminance information, and a reference color space.

According to an embodiment, the method for operating the AF may further comprise identifying an AR policy from an application provider (AP).

According to an embodiment, the method for operating the AF may further comprise transmitting the MPE to which the color remapping processed by the AS is applied to the UE.

According to an embodiment, the method for operating the AF may further comprise performing at least one of service discovery and service provisioning.

In the above-described specific embodiments, the components included in the disclosure are represented in singular or plural forms depending on specific embodiments proposed. However, the singular or plural forms are selected to be adequate for contexts suggested for ease of description, and the disclosure is not limited to singular or plural components. As used herein, the singular forms "a," "an," and "the" are intended to include the plural forms as well, unless the context clearly indicates otherwise.

Although specific embodiments of the present invention have been described above, various changes may be made thereto without departing from the scope of the present invention. Thus, the scope of the disclosure should not be limited to the above-described embodiments, and should rather be defined by the following claims and equivalents thereof.

## Claims

1. A method for operating an application function (AF) in a wireless communication system, the method comprising:
receiving information about an augmented reality (AR) capability of a user equipment (UE) from the UE;
identifying an AR capability about a color of the UE based on the information about the AR capability and transmitting AR capability information about the color of the UE to an application server (AS); and
receiving a media player entry (MPE) to which color remapping processed by the AS is applied from the AS.

2. The method of claim 1, wherein the information about the AR capability includes at least one of an AR UE type, an AR display type, a valid color space, an opacity, an invalid color space, illuminance measurement information, illuminance information, and a reference color space.

3. The method of claim 1, further comprising identifying an AR policy from an application provider (AP).

4. The method of claim 1, further comprising transmitting the MPE to which the color remapping processed by the AS is applied to the UE.

5. The method of claim 1, further comprising performing at least one of service discovery and service provisioning.

6. A method for operating a UE in a wireless communication system, the method comprising:
transmitting information about an augmented reality (AR) capability of the UE to an application function (AF); and
receiving a media player entry (MPE) to which color remapping processed by an application server (AS) based on the information about the AR capability is applied from the AS.

7. The method of claim 6, wherein the information about the AR capability includes at least one of an AR UE type, an AR display type, a valid color space, an opacity, an invalid color space, illuminance measurement information, illuminance information, and a reference color space.

8. The method of claim 6, further comprising performing at least one of service discovery and service provisioning.

9. An application function (AF) entity in a wireless communication system, comprising:
a transceiver; and
a processor configured to controll to:
receive information about an augmented reality (AR) capability of a user equipment (UE) from the UE;
identify an AR capability about a color of the UE based on the information about the AR capability and transmit AR capability information about the color of the UE to an application server (AS); and
receive a media player entry (MPE) to which color remapping processed by the AS is applied from the AS.

10. The AF entity of claim 9, wherein the information about the AR capability includes at least one of an AR UE type, an AR display type, a valid color space, an opacity, an invalid color space, illuminance measurement information, illuminance information, and a reference color space.

11. The AF entity of claim 9, wherein the processor is configured to identify an AR policy from an application provider (AP).

12. The AF entity of claim 9, wherein the processor is configured to control to transmit the MPE to which the color remapping processed by the AS is applied to the UE.

13. The AF entity of claim 9, wherein the processor is configured to perform at least one of service discovery and service provisioning.

14. A UE in a wireless communication system, comprising:
a transceiver; and
a processor configured to controll to:
transmit information about an augmented reality (AR) capability of the UE to an application function (AF); and
receive a media player entry (MPE) to which color remapping processed by an application server (AS) based on the information about the AR capability is applied from the AS.

15. The UE of claim 14, wherein the information about the AR capability includes at least one of an AR UE type, an AR display type, a valid color space, an opacity, an invalid color space, illuminance measurement information, illuminance information, and a reference color space.
